# EUROPEAN PATENT SPECIFICATION

(11) **EP 0 339 008 B1**
(45) Date of publication and mention of the grant of the patent: **14.07.1993**
(21) Application number: 89850127.5
(22) Date of filing: 21.04.1989
(51) Int. Cl.: A01C 23/04, G05D 7/06, F16K 7/10

(54) **Device for controlling the flow of viscous fluids**
Vorrichtung zur Durchflussregelung viskoser Flüssigkeiten
Dispositif pour la régulation du débit des fluides visqueux

(30) Priority: 22.04.1988 SE 8801519
(43) Date of publication of application: 25.10.1989
(73) Proprietor: JORDBRUKSTEKNISKA INSTITUTET, S-750 07 Uppsala (SE); OLBY-MASKINER AB, 541 33 Skövde (SE); CEMENTA MINERAL, S-200 61 Malmö (SE)
(72) Inventor: Ekfäldt, Conny, S-740 22 Bälinge (SE); Asberg, Göte, S-75590 Uppsala (SE)
(74) Representative: Svanfeldt, Hans-Ake

(56) References cited:
- EP-A- 0 200 538
- WO-A-83/01693
- WO-A-83/02935
- WO-A-85/01786
- DE-U- 8 523 734
- GB-A- 2 069 726
- US-A- 2 676 609
- US-A- 3 083 943
- US-A- 4 354 624
- PATENT ABSTRACTS OF JAPAN, vol. 5, no. 147 (M-88)(819), 17th September 1981; & JP-A-5676766 (KAWESE TETSUKO)

## Description

The present invention relates to a device for controlling the flow of high viscous, non-homogeneous fluids, such as floating manure, from at least one pressurized fluid tube.

A known device of the kind referred to above comprises a slurry tank filled with floating manure. The slurry tank is mounted on a carriage, a so called slurry tanker, drawn by a tractor. The floating manure is sprayed against a splash plate which then will spread the floating manure.

A drawback with this known device is that the lateral uniformity of spreading is poor. With this known device it is moreover difficult to dispense a predetermined constant, but adjustable, quantity of manure per area unit of the soil. Another drawback with this known device is the ammonia losses taking place when the manure is flying in the air from the splash plate to the soil. The manure actually applicated on the soil will therefore have a reduced ammonia content.

From GB-A-2 069 726 there is known a method for maintaining a constant rate of flow of fluid in a flow line using an electrically operable valve in the flow line. However this method is not applicable to a system having a multiplicity of outlets for high viscous non-homogenic fluids like manure, when unfavourable pressure gradients occurs along the pressurized fluid tube. A system disclosed in US-A-4 354 624, which document discloses the features of the preamble of claim 1, has the disadvantage that the amount of slurry disposed is fixed regulated by a controlling element consisting of a thin disc having an orifice. Such a constriction will have a high viscous non-homogenic fluid like manure to clog at the inlet side of this controlling element, which may be totally blocked, besides it is laborious to change the settings of the injectors.

From US-A-3 083 943 there is known a diaphragm-type of valve. This valve shows portions around the circumfere where a high viscous non-homogenic fluid like manure will be collected and clog the valve whereby the diaphragm will be prevented from operating properly. In other words this kind of valve do not function for high viscous, non-homogenic fluid, and is therefore not very good from the point of hygiene, besides its demand of large amounts of air.

The device in accordance with the invention is provided with means for individually controlling the output flow of high viscous fluid from each spreading device. The individual control means are used to compensate for the pressure drop along the spreading boom; the spreading device situated at the extreme ends of the spreading boom, for example, is set to be open for a period of time which is longer than that during which spreading devices situated at the center of the spreading boom, where the pressure is high, are open.

The device in accordance with the invention will allow for an accurate adjustment of the dispensed volume so as to dispense an equal volume at each spreading device along the spreading boom.

To achieve this the device in accordance with the invention has the features which are indicated in the attached claim 1.

With the device in accordance with the invention it is possible to spread the high viscous fluid in a manner similar to that by which low viscous liquids are spread by nozzles extending along a transverse spreading boom mounted at the rear portion of the slurry tanker.

The device is provided with an overall control by which the volume of the output flow from each spreading device is controlled. Second control means will control the number of discharges per unit of time so as to keep the number of manure discharges per travelled meter constant and thus independent of the speed by which the tractor is moving.

Each spreading device comprises an outlet hose, also referred to as a spreading hose, connected to a pressurized fluid tube and a membrane valve is created in the knee of the outlet hose. A pressure is periodically applied to the membrane from a source of pressurized fluid under the control from electrical signals. The passage of the high viscous fluid through the spreader hose is facilitated by the treatment and massage the fluid will undergo during its passage along the pulsating membrane.

With the device in accordance with the invention the diameters of the spreading boom tube and of the spreader hoses may be large although the fluid flows may be small. This is possible because the pressure which is built up in front of the closed membrane valves is used to force the liquid through the membrane valve at a relatively high speed when the valve opens.

Another membrane valve is known from GB-A-2 076 504. The membrane valve in accordance with the present invention is in the form of an elongate, in the transverse direction plane, in the longitudinal direction curved surface which is in contrast to the membrane valve in accordance with the patent wherein the membrane is cylindrical.

Various embodiments of the invention will be described further down i connection with the accompanying drawings wherein:
- Figure 1: is a perspective view of a spreading boom provided with a number of spreading devices,
- Figure 2: is an exploded view of an individual spreading device and its respective membrane valve,
- Figure 3: is a block diagram showing the electronic control system for controlling the individual membrane valves,
- Figure 4: are time-to-voltage diagrams of the electric control signals for opening and closing respectively the membrane valves of the spreading boom shown in Figure 1,
- Figure 5: is a time-to-voltage diagram of the output signal from a monostable multivibrator which controls the opening and closing respectively of an individual membrane valve,
- Figure 6: is a circuit diagram of an important part of the aritmetic-logical unit of the control system,
- Figure 7: is a circuit diagram of the overall control by which the pulse ratio of all of the monostable multivibrators is adjustable, and
- Figure 8: is circuit diagram of a monostable multivibrator and separate means by which the pulse ratio of an individual multivibrator is adjustable.

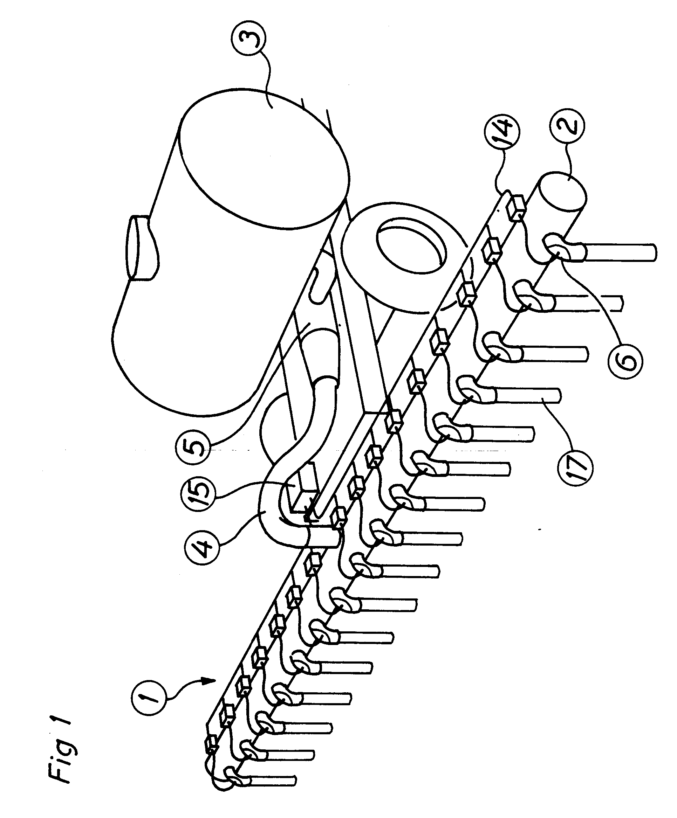

In Figure 1 the invention is shown as adapted to spreading of floating manure from a spreading boom which is supported by a frame which in turn is mounted on a slurry tanker. A spreading boom 1 comprises a transverse tube 2 of large diameter. Floating manure from a tank 3 supported on the slurry tanker is delivered to the midpoint of the transverse tube 2 via a tube 4 which communicates with the interior of the transverse tube 2. A pressure is acting on the floating manure in the tube 4 and in the transverse tube 2. This pressure is generated by a pump 5 which is connected to the power-takeoff of the tractor. A number of spreading devices, generally shown by reference numeral 6, are equally spaced along the length of the transverse tube 2 and extend downwardly therefrom. In the embodiment shown there are sixteen spreading devices.

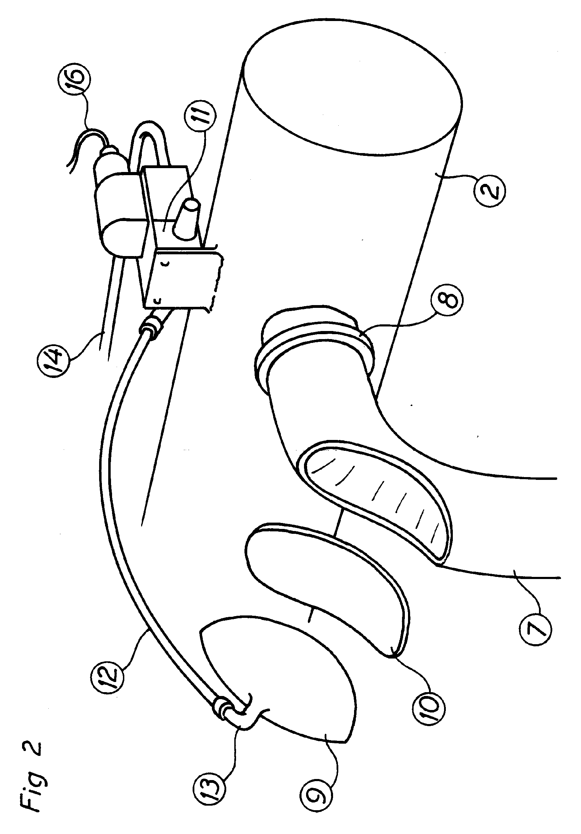

In Figure 2 a spreading device is shown in detail. A spreading tube in the form of a 90° tube bend is generally denoted by reference designation 7. The upper portion of the spreader tube communicates via a sleeve 8 with the interior of the transverse tube 2. A portion 9 of the envelope surface in the region of the knee-cap of the bend has been cut away along a curved line. The depth of the cut extends down to about half the diameter of the tube bend 7. Between the cut away portion ("knee-cap") 9 and the opening then formed in the tube bend there is inserted a membrane 10 of elastic material. The membrane 9 is made from a flat blank, for example rubber having a thickness of about 3 mm, which then is bend to the form shown in Figure 2, said form being adapted to that of the opening. The membrane covers the opening and is pressed over the opening with the aid of the "knee-cap" portion 9. Two hose clamps, not shown, will clamp units 9 and 10 fluid tightly over the rim of the opening which is formed when the knee-cap is cut away from said tube bend 7.

The output side of an electromagnetically controlled pressure valve 11 communicates via a pressure conduit and a connector 13 with the fluid tight as well as pressure tight chamber which is formed between the cut away portion 9 and the membrane 10. The input side of the pressure valve is connected to a pressure manifold 14 (compare also Figure 1) which in turn communicates with a pressure source 15 common to the pressure valves of all the spreading devices. Each pressure valve is activated by means of electrical signals which are applied to each pressure valve 11 over electrical conductors 16 shown in Figure 2. Each pressure valve 11 is opened and closed in cycles in a manner described in detail below. The membrane valve formed by the membrane 10 and the pressure valve 11 is open when the pressure valve 11 is closed and the pressure supply to the membrane is off. During this condition the membrane 10 is pressed radially outwardly by the pressure prevailing upstream the membrane in the tube bend 7 and in the transverse tube 2. The floating manure will then move along the tube bend and will be expelled downwardly through a flexible hose 17 provided at the lower end of the tube bend 7 and will finally hit the soil. By adapting the height of the spreader boom relative to the soil and by virture of the flexible hoses 17, which may drag the soil, the motion of the floating manure in air is as short as possible. Adjusting the height of the spreader boom in this manner is done in a manner known per se by raising or lowering the frame, not shown, on which the spreader boom is mounted. However, when the pressure valve 11 is open the membrane valve is closed since pressurized air from the pressure source 15 then will flow into the membrane valve and will inflate the membrane 10 until the membrane sealingly contacts the interior surface of the tube bend 7 opposite to the "knee-cap" portion 9.

From the above it is evident that the manure volume expelled at each spreading device is related to the time during which the associated membrane valve is open. This time is controlled by the control system described below. The control system will moreover open the membrane valves one at a time in sequence along the spreader boom thereby avoiding that all valves are open simultaneously.

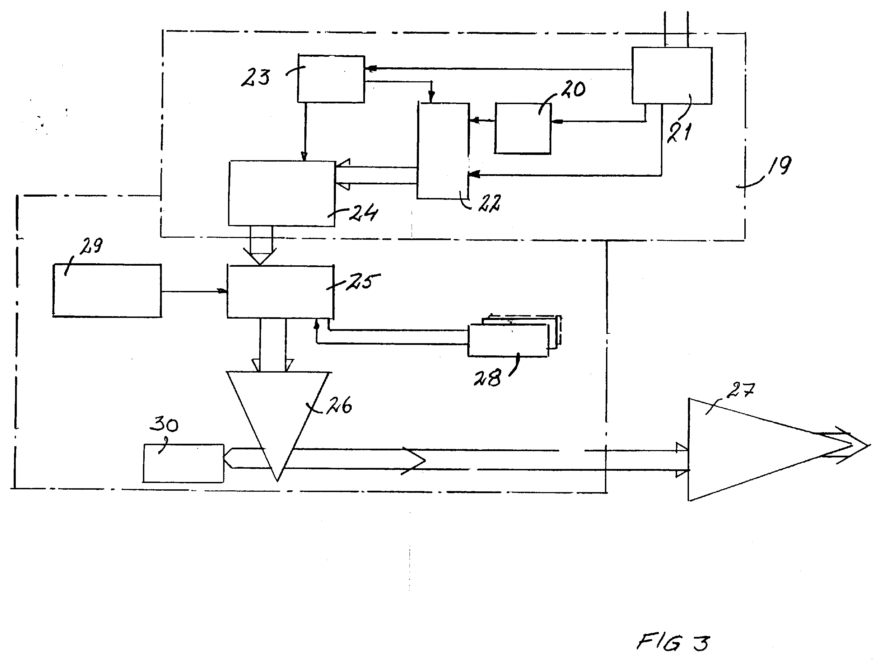

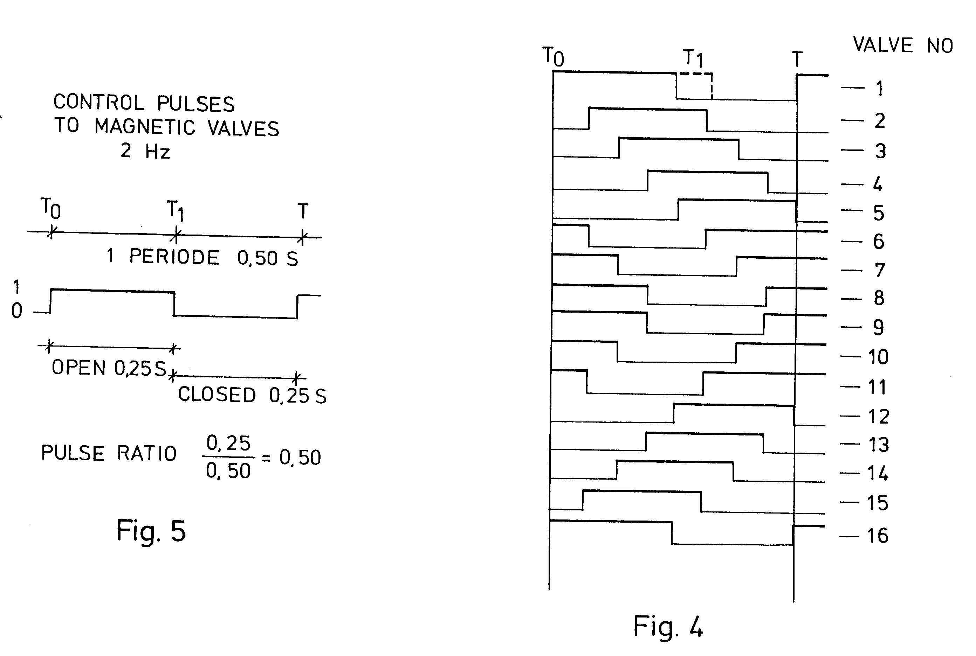

Reference is now made to Figure 1. Suppose the spreading devices are numbered from 1 to 16 starting from the left end of the spreader boom. In the preferred embodiment of the invention valves number 1 and 16 are opened at the same instant. Next, valves number 2 and number 15 open etc. until finally valves number 8 and 9 open. The sequence is then repeated by opening once again valves number 1 and 16. This has been illustrated in Figure 4. The valves are opened at a predetermined frequency which in the preferred embodiment is 2 Hz. In the preferred embodiment the valve is open during half of the period, i.e. the pulse ratio is 0.5. As will be evident from the following description the frequency of the valves as well as the pulse ratio of the valves is adjustable. From Figure 4 it is also apparent that a short period after the opening of for example valve number 1 valve number 2 will open and a short period thereafter valve number 3 will open and after another short period valve 4 will open. Then valve number 1 will close before the next following valve number 5 will open. In other words the instants at which the valves open are phase shifted. Since valves number 1, 16 and 2, 15 etc. are activated in pairs, a corresponding phase shift will appear at valves number 16, 15, 14 and 13. The electric control system providing the control of the valves in pairs as well as said previously mentioned sequence control (the order in which the valves open, in this case from the ends of the spreader boom inwardly towards its centre) as well as the phase shifting of the opening times is shown in the block diagram of Figure 3. On a mother board 20 there is a voltage stabilizer 21 which is connected to the tractor's battery. The voltage stabilizer provides a stabilized DC-voltage to the various units of the control system. On the mother board there is also an arithmetic and logic unit (ALU) 22 providing the operation of the valves in pairs and in the sequence just referred to. Said ALU 22 also provides the necessary phase shifting of the opening times of the valves. An oscillator 23 constitutes the time base of the control system. Each valve is associated with a D-latch 24, also referred to as a D-type flip-flop, as well as a monostable multivibrator 25. Under control from the ALU a D-latch will send control signals to its associated monostable multivibrator 25 the output signal of which is amplified in a buffer amplifier 26 and a power amplifier 27 which will drive the magnet valve on the spreading device associated with said D-latch. The pulse ratio of each individual monostable multivibrator is set with a potentiometer schematically shown at 28. Accordingly each multivibrator is associated with its own potentiometer. This potentiometer forms part of the RC-circuit of the monostable multivibrator. If the pulse ratio of the multivibrator is increased the volume of floating manure discharged at its associated spreading device is also increased. Conversly said volume decreases when the pulse ratio is decreased by turning the potentiometer 28 associated with said multivibrator. There is a pressure drop from the centre and along the length of the spreader boom towards each end. Therefore it is desired to keep the magnet valves of the outermost spreading devices, i.e. spreading devices number 1 and 16, open during a relative long time so that the volume of floating manure discharged by said spreading devices will be equal to the volume discharged at spreading devices number 8 and 9 located centrally on the spreader boom. This individual setting of the opening times is made once and forever, for example in connection with delivery of the device or in connection with membrane replacement.

An overall control 29 is controlling the time function of each of the monostable multivibrators 25. This controlling action takes place by increasing or decreasing the pulse ratio of each monostable multivibrator. The amount by which the pulse ratio is changed is equal for all of the multivibrators 25. This implies that the time during which the multivibrators are active is shifted in relation to the individually set active time. If for example the active times of the multivibrators are decreased the pressure of the floating manure in the transverse tube 2 tends to increase. Then, if the pump 5 is of the kind that tends to maintain a constant pressure in the transverse tube 2, then the capacity of the pump will decrease and the output volume of floating manure will also decrease. In this manner it is very simple to control the output volume of floating manure. Thus, it is evident that the overall control will control the pulse ratio of the monostable multivibrators and therefore also that of the magnet valves.

If the tractor is moving at a certain predetermined speed the oscillator 23 is adjusted to a frequency which corresponds to for example two discharges of manure per travelled metre. If the tractor is moving at a different higher speed, then the oscillator is set to a higher frequency, i.e. the frequency of the multivibrators 25 is increased thereby increasing the frequency of the discharges until two discharges per travelled metre again is achieved.

A display 30 of light emitting diodes (LED:s) comprises a number of LED:s, said number corresponding to the number of spreading devices. The diodes are arranged in a row at positions corresponding to the positions of the respecive spreading device along the spreader boom 1. The display indicates the spreading devices which for the moment are open.

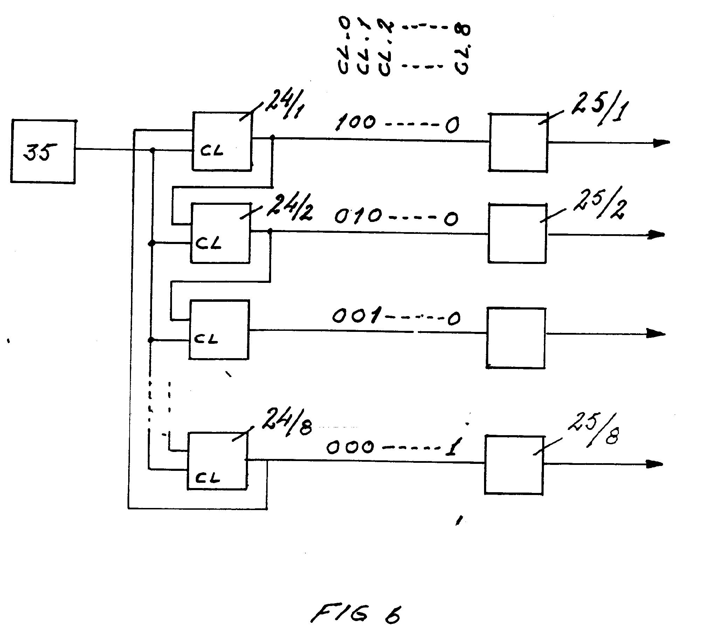

Figure 6 is a circuit diagram of a relevant portion of the ALU and its operation on the monostable multivibrators 25.

In order to simplify the explanation the control of the monostable multivibrators associated with spreading devices number 1 up to number 8 on the left part of the spreader boom 1 will first be described. In Figure 5 the monostable multivibrators are labeled 25/1, 25/2....25/8.

As previously indicated the monostable multivibrators are operated at a frequency of 2 Hz, i.e. the period is 0.5 seconds. Each multivibrator is thus open during 0.25 seconds and is closed during 0.25 seconds. The pulse ratio of the multivibrator is accordingly 0.25:0.50 = 0.50.

The input to each monostable multivibrator 25/1, 25/2...25/8 is connected to the output of its associated D-latch 24/1, 24/2....24/8. Further, the output of D-latch 24/1 is also connected to the input of the next D-latch 24/2 the output of which is connected to the input of the next D-latch 24/3 etc. down to the D-latch 24/8 the output of which is brought back to an input of the first D-latch 24/1. The clock inputs CL of each of the D-latches 24/1.... 24/8 are connected to a common clock 35. In the preferred embodiment of the invention this clock is an astable multivibrator the frequency of which in this case is eight times the frequency of the D-latches 25, i.e. 16 Hz. When the system is initialized by the system initializing circuit 20 the D-latch 24/1 will be set and its output will be high while the outputs of the rest of the resetted D-latches are low as is indicated by the vertical column CL-O of digits in Figure 6. The high output signal will trigger the monostable multivibrator 25/1 which then will output an electrical control signal to its magnet valve. This electrical control signal is the uppermost control signal shown in Figure 4. The high output level of multivibrator 24/1 is also present at the input of D-latch 24/2 while the inputs of the rest of the latches are low. When the next clock pulse arrives at the clock input of the D-latches the signal at the input of each latch will be transferred to the output. The high logical level on the input of D-latch 24/2 will thus be transferred to the output of D-latch 24/2 as well as to the input of D-lacth 24/3. The low logical level on the inputs of the rest of the D-latches is transferred to the output of said latches as well as to the input of the next D-latch. After the appearance of the first clock pulse CL1 the high logical level has been shifted from the output of 24/1 to the output of 24/2 while the rest of the D-latches on their outputs will have a low logical level as is indicated by the vertical digit column CL-1. After the appearance of the second clock pulse CL2 the high logical level has been shifted to the D-latch 24/3 and the outputs of the rest of the latches will have a low logical level. In this manner the high logical level is cycled through the series connected D-latches. The output signal of the monostable multivibrator 25/2 is the second signal from the top in Figure 4. The rising edge of this signal is thus time delayed in relation to the first monostable multivibrator 25/1 with an amount corresponding to the period of the clock frequency, i.e. in this case 1/16 seconds, i.e. 62,5 miliseconds. In the same manner the rising edge of the output signal of the third monostable multivibrator 25/3 is time delayed by 1/16 second in relation to the rising edge of the output signal of the second monostable multivibrator 25/2. This time delay between the rising edges is thus the previously mentioned phase shift of the output signals of the monostable multivibrators. By adjusting the frequency of the clock 35 this phase shift can be increased or decreased.

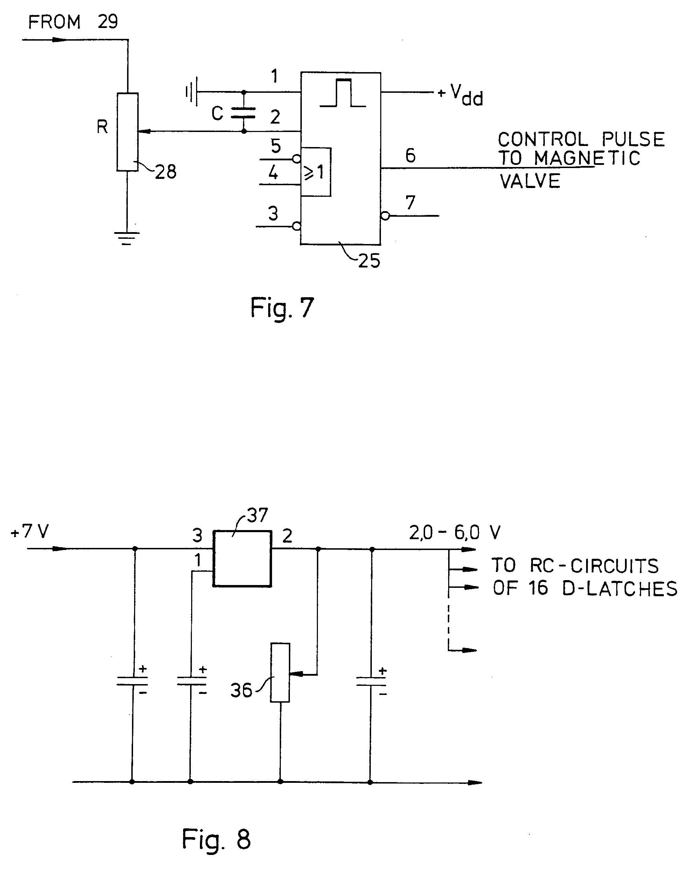

In order to compensate for the pressure drop along the spreader boom 2 it is possible to keep individual valves open for a time which is longer in relation to the time during which others are open. The circuit by which this is achieved is shown in Figure 7. The monostable multivibrator is here a 4528 type. The active time of this multivibrator 25 is adjusted by adjusting the time constant of the RC-circuit of the multivibrator with the potentiometer 28. If the active time is increased, as is indicated with the dashed line at the falling edge of the uppermost signal in Figure 4 the pulse ratio of the multivibrator will increase from the indicated value of 0.5. It is also possible to decrease the lenght of a output pulse of the monostable multivibrator thereby reducing the pulse ratio.

In a preferred embodiment of the invention the potentiometers 28 are small miniature potentiometers arranged under its associated LED in the LED display 30. As mentioned earlier each LED is associated with its own magnet valve and will emit light when said valve is actuated. The setting of the potentiometer is made, for example, with a small screw driver.

By providing another group of eight D-latches in the manner shown in Figure 6 and by clocking said additional D-latches from clock 35 the magnet valves will be controlled in pairs.

Suppose said additional eight D-latches are numbered 24/9, 24/10... 26/16. When the system is initializted the high logical level is applied on D-latch 24/1 as well as on D-latch 24/16. D-latch 24/16 controls the membrane valve situated at the extreme right on the right half of the spreader boom as viewed in Figure 1. The next clock pulse will transfer the high logical level of D-latch 24/16 to D-latch 24/15 at the same time as the high logical level of D-latch 24/1 will be transferred to 24/2. In this manner the valves are controlled in sequence and in pairs.

In Figure 8 a circuit for the overall control is shown. With this overall control the pulse ratio of all monostable multivibrators can be adjusted simultaneously in order to control the volume of manure which is discharged each time the magnet valves are opened. This adjustment is made by adjusting the operating voltage of the RC-circuits of the multivibrator by means of a potentiometer 36 common to all multivibrators. This potentiometer 36 is connected to an IC-regulator 37 which in turn is operated from a constant +7V DC-voltage from the voltage stabilizer 21. The output voltage of the IC-regulator is a DC-voltage which can range from 2.0 to 6.0 V and which is applied to each of the monostable multivibrators 25, more particularly to the time constant controlling RC-circuit, shown in Figure 7, of each multivibrator. The lower the voltage applied to the RC-circuit is, the longer is the charging time of the capacitor C in Figure 7. The IC-regulator is an LM 317-type.

With the spreader boom shown in Figure 1 the floating manure is uniformly spread and the so called coefficient of variation for lateral uniformity of spreading is lower than 10% which should be compared to the corresponding coefficient of variation of more 30% achieved with the splash plate mentioned in the introductory part of the specification.

The above described preferred embodiment of the invention may be modified and varied within the scope of the accompanying claims. For example the D-latches may be connected in such a manner that the valves open in a different sequence than that indicated and also with a different phase shift of the opening times of the valves than that indicated. For example the phase shift may be so large that only one pair of valves are open at a time in which case it may be ample to increase the frequency of the multivibrators.

The invention can be also be applied for other liquids than floating manure; it may for example be used with other high viscous fluids such as waste products from food industry, waste water from sewage treatment works etc.

The invention can also be applied for a fluid conduit corresponding to the transverse tube 2 combined with one single spreading device.

## Claims

1. A device for controlling the flow of a high viscous, non-homogeneous fluid, for example floating manure, from at least one pressurized fluid tube (2) along which a plurality of outlet tubes are provided, said outlet tubes each having a smaller diameter than that of the fluid tube characterized in that each outlet tube (7) is provided with a controlled membrane valve, means (11, 12) for periodically opening and closing said valve, and means (28) for controlling the output from each outlet tube (7) by setting of the pulse ratio, i.e. the ratio between the time (T₁) of a period during which said valve (9, 13) is open and the total period time (T), the device being provided with means (35, 24) for periodically opening and closing pairs of said valves in sequence along the pressurized fluid tube to obtain lateral uniformity of spreading of the fluid from said fluid tube (2).

2. Device in accordance with claim 1, **characterized** in that said valve comprise a pneumatically or hydraulically operated membrane valve (9, 13).

3. A device in accordance with claim 2, **characterized** by means (25, 28) for individual setting of the pulse ratio of each valve.

4. A device in accordance with claim 3, **characterized** by means (35, 24/1....24/8) for phase shifting the instant (t₀) at which one valve, comprised in a set of valves, opens in relation to a predetermined valve pair in said pressurized tube.

5. A device in accordance with claim 4, **characterized** in that the phase shift between successive valves pairs is constant.

6. A device in accordance with one of the preceding claims, said controlled membrane valve being for high viscous fluids and comprising a pressure operated membrane adapted to pinch off and open respectively an outlet tube (7) through which the high viscous fluid is adapted to pass, **characterized** in that said outlet tube (7) is in the form of a generally 90° tube bend, that at the "knee-cap" of said bend a portion of tube is cut away along a curved line extending down to about half the diameter of said outlet tube (7) leaving a generally oval, curved rim, that an elastic membrane (10) is provided to cover said rim and the area enclosed by said rim, and that a cap member (9) is provided to press said membrane (10) in a fluid tight and pressure tight manner against said rim.

## Patentansprüche

1. Vorrichtung zur Durchflussregelung einer hochviskosen, nicht-homogenen Flüssigkeit, z.B. flüssigen Düngers, von mindestens einem unter Druck stehenden und längsseits mehrere Auslassrohre aufweisenden Flüssigkeitsrohr (2), wobei jedes Auslassrohr einen Durchmesser, der kleiner als der des Flüssigkeitrohres ist, aufweist, dadurch **gekennzeichnet,** dass jedes Auslassrohr (7) ein stellbares Membranventil, Mittel (11, 12) um das Ventil periodisch zu öffnen und zu schliessen, sowie Mittel (28) zur Steuerung des Ausflusses jedes Auslassrohres (7) durch Einstellung des Tastverhältnisses, d. h. das Verhältnis zwischen die Zeit (T₁) einer Periode, während welcher die Ventilmittel (9, 13) geöffnet sind, und die gesamte Periodenzeit (T), aufweist, wobei die Vorrichtung, um eine lateral gleichmässige Verteilung des Flüssigkeit des Flüssigkeitsrohres zu erregen, Mittel (35, 24), um Paare von Ventilen des unter Druck stehenden Flüssigkeitsrohres (2) periodisch und längsseits sequentiell zu öffnen und zu schliessen, aufweist.

2. Vorrichtung nach Anspruch 1, dadurch gekennzeichnet, dass das Ventil ein pneumatisch oder hydraulisch betriebtes Membranventil (9, 13) aufweist.

3. Vorrichtung nach Anspruch 2, dadurch gekennzeichnet, dass Mittel (25, 28) für die individuelle Einstellung des Tastverhältnisses jedes Ventils vorgesehen sind.

4. Vorrichtung nach Anspruch 3, dadurch gekennzeichnet, dass Mittel (35, 24/1....24/8), um die Phase des Zeitpunkts (t₀), bei welchem ein Ventil einer Gruppe von Ventilen im Verhältnis zu einem vorbestimmten im unter Druck stehenden Rohr befindlichen Ventilpaar geöffnet wird, zu verschieben, angeordnet sind.

5. Vorrichtung nach Anspruch 4, dadurch gekennzeichnet, dass die Phasenverschiebung zwischen aufeinanderfolgende Ventilpaare konstant ist.

6. Vorrichtung nach einem der vorherigen Ansprüche, wobei das verstellbare Membranventil für hochviskosen Flüssigkeiten angeordnet ist und eine druckgesteuerte Membrane, die, um ein für den Durchfluss der hochviskosen Flüssigkeit angeordneten Auslassrohr (7) zu abkneifen bzw. öffnen, angeordnet ist, aufweist, dadurch **gekennzeichnet**, dass das Auslassrohr (7) als ein wesentlich um 90° sich krümmende Bogenrohr ausgebildet ist, wobei einen Teil des Rohres an der "Kniescheibe" der Krümmung, längs einer krummen sich ungefär um die Hälfte des Durchmessers des Auslassrohres (7) streckenden Linie, ausgeschnittet ist, so dass eine wesentlich ovalen, krümmenden Kante für eine, zur Deckung der Kante sowie der von der Kante begrenzten Fläche angeordneten, elastischen Membrane (10) zurückbliebt, wobei auch Verschlussmittel (9), um den Membran (10) dicht gegen Flüssigkeiten und Druck an die Kante zu drücken, vorgesehen sind.

## Revendications

1. Dispositif pour la régulation du débit des fluides hautement visqueux et non-homogènes, comme du fumier liquide, venant du moins un tuyau à pression de fluide (2) comportant, le long de son longeur, une pluralité de tuyaux de décharge, lesdits tuyaux de décharge présentant un diamètre inférieure de celui du tuyau de fluide, **caractérisé** en ce que chaque tuyau de décharge (7) comporte un clapet à membrane réglable, des moyens (11, 12) pour l'ouverture et la fermeture périodique dudit clapet et des moyens (28) de réglage du débit de chacun des tuyaux de décharge (7) par réglage du rapport des impulsions, c.-à-d. le rapport entre l'instant (T₁) d'une période, pendant laquelle ledit clapet (9, 13) est ouvert, et la duration totale de la période du temps (T), le dispositif comportant des moyens (35, 24) ouvrant et fermant des pairs desdites clapets périodiquement et séquentiellement le long le tuyau à pression de fluide pour produire une distribution latéralement uniforme du fluide dudit tuyau de fluide (2).

2. Dispositif selon la revendication 1, **caractérisé** en ce que ledit clapet comporte un clapet à membrane de commande (9, 13) pneumatique ou hydraulique.

3. Dispositif selon la revendication 2, **caractérisé** en ce qu'il comporte des moyens (25,28) pour régler individuellement le rapport des impulsions de chaque clapet.

4. Dispositif selon la revendication 3, **caractérisé** en ce qu'il comporte des moyens (35, 24/1....24/8) de déphasage de l'instant (t₀), lorsqu'un clapet compris dans un groupe de clapets s'ouvre au rapport d'un pair de clapets prédéterminé dans ledit tuyau à pression.

5. Dispositif selon la revendication 4, **caractérisé** en ce que le déphasage entre des pairs successifs de clapets est de caractère constant.

6. Dispositif selon l'une quelconque des revendication précédentes, ledit clapet à membrane réglable étant fourni pour des fluides hautement visqueux et comportant une membrane à commande de pression adaptée à fermer et ouvrir respectivement un tuyau de décharge (7) à travers lequel le fluide hautement visqueux est adapté a passer, **caractérisé** en ce que ledit tuyau de décharge (7) est disposé en forme d'une courbe de tuyau d'un angle généralement de 90°, ledit tuyau présentant à la position de la "rotule" une découpure, qui s'étend approximativement jusqu'à la moitié du diamètre dudit tuyau de décharge (7), laissant un bord généralement ovale et courbé, une membrane élastique (10) est fournie à couvrir ledit bord et la superficie définie par ledit bord, et des moyens capsulants (9) sont fournie a presser ladite membrane (10) contre ledit bord d'une façon étanche aux fluides et à la pression.
